# EUROPEAN PATENT SPECIFICATION

(11) **EP 2 831 505 B1**
(45) Date of publication and mention of the grant of the patent: **12.04.2017**
(21) Application number: 12780556.2
(22) Date of filing: 29.03.2012
(51) Int. Cl.: F23R 3/04, F23R 3/28, F23C 7/02, F23C 9/08

(54) **TURBOMACHINE COMBUSTOR ASSEMBLY**
VERBRENNERANORDNUNG EINER TURBOMASCHINE
ENSEMBLE À DISPOSITIF COMBUSTOR DE TURBOMACHINES

(43) Date of publication of application: 04.02.2015
(73) Proprietor: General Electric Company, Schenectady, NY 12345 (US); ExxonMobil Upstream Research Company, Spring TX 77389 (US)
(72) Inventor: SOKOLOV, Alexander Nikolay, Moscow 107023 (RU); TRETYAKOV, Dmitry Vladlenovich, Moscow 107023 (RU); SLOBODYANSKIY, Ilya Aleksandrovich, Greenville, South Carolina 29615 (US)
(74) Representative: Huang, Xingye
(86) International application number: PCT/RU2012/000232
(87) International publication number: WO 2013/147633

(56) References cited:
- EP-A1- 0 169 431
- EP-A1- 0 488 557
- EP-A2- 2 182 287
- DE-A1-102009 003 572
- US-A- 2 488 911
- US-A- 3 643 430
- US-A- 4 399 652

## Description

### BACKGROUND OF THE INVENTION

The subject matter disclosed herein relates to the art of turbomachines and, more particularly, to a turbomachine combustor assembly.

Many turbomachines include a compressor portion linked to a turbine portion through a common compressor/turbine shaft or rotor and a combustor assembly. The compressor portion guides a compressed airflow through a number of sequential stages toward the combustor assembly. In the combustor assembly, the compressed airflow mixes with a fuel to form a combustible mixture. The combustible mixture is combusted in the combustor assembly to form hot gases. The hot gases are guided to the turbine portion through a transition piece. The hot gases expand through the turbine portion creating work that is output, for example, to power a generator, a pump, or to provide power to a vehicle. In addition to providing compressed air for combustion, a portion of the compressed airflow is passed through the turbine portion for cooling purposes.

The combustor assembly includes a liner portion that defines a combustion chamber. The combustible mixture is combusted in the combustion chamber to form the hot gases. Over time, the liner begins to erode due to exposure to the hot gases. Often times, the erosion begins in high temperature zones located adjacent outlet portions of combustor nozzles. The erosion will have a negative impact on combustor operational life requiring costly and periodic maintenance and replacement in order to maintain turbomachine operation. Document US4399652 A1 discloses the preamble of claim 1.

### BRIEF DESCRIPTION OF THE INVENTION

According to one aspect of the invention, a turbomachine combustor assembly according to claim 1 is provided.

According to another aspect of the invention, a method of introducing a non-combustible fluid into a turbomachine combustor according to claim 9 is provided.

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of a turbomachine including a combustor assembly in accordance with an exemplary embodiment;
FIG. 2 is a partial cross-sectional view of the combustor assembly in accordance with the exemplary embodiment;
FIG. 3 is an end view of the combustor assembly of FIG. 2; and
FIG. 4 is a detail view of a fluid delivery nozzle of the combustor assembly of the exemplary embodiment.

The detailed description explains embodiments of the invention, together with advantages and features, by way of example with reference to the drawings.

### DETAILED DESCRIPTION OF THE INVENTION

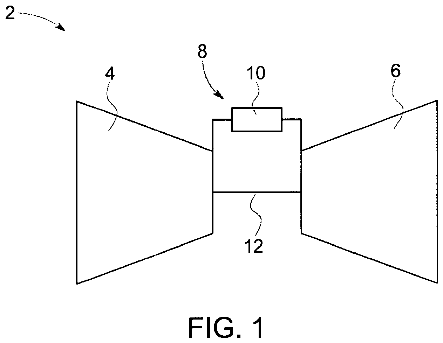

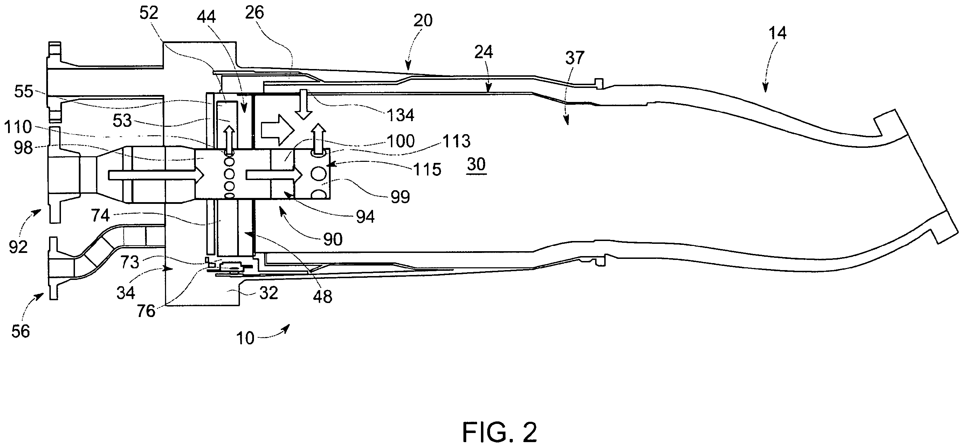

With reference to FIGs. 1 and 2, a turbomachine constructed in accordance with an exemplary embodiment is indicated generally at 2. Turbomachine 2 includes a compressor portion 4 operatively connected to a turbine portion 6. A combustor assembly 8 is fluidly connected to compressor portion 4 and turbine portion 6. Combustor assembly 8 is formed from a plurality of circumferentially spaced combustors, one of which is indicated at 10. Of course it should be understood that combustor assembly 8 could include other arrangements of combustors. Compressor portion 4 is also linked to turbine portion 6 through a common compressor/turbine shaft 12. With this arrangement, compressor portion 4 delivers compressed air to combustor assembly 8. The compressed air mixes with a combustible fluid or fuel to form a combustible mixture. The combustible mixture is combusted in combustor 10 to form products of combustion or hot gases that are delivered to turbine portion 6 through a transition piece 14. The hot gases expand through turbine portion 6 along a gas path (not separately labeled) to power, for example, a generator, a pump, a vehicle or the like (also not shown).

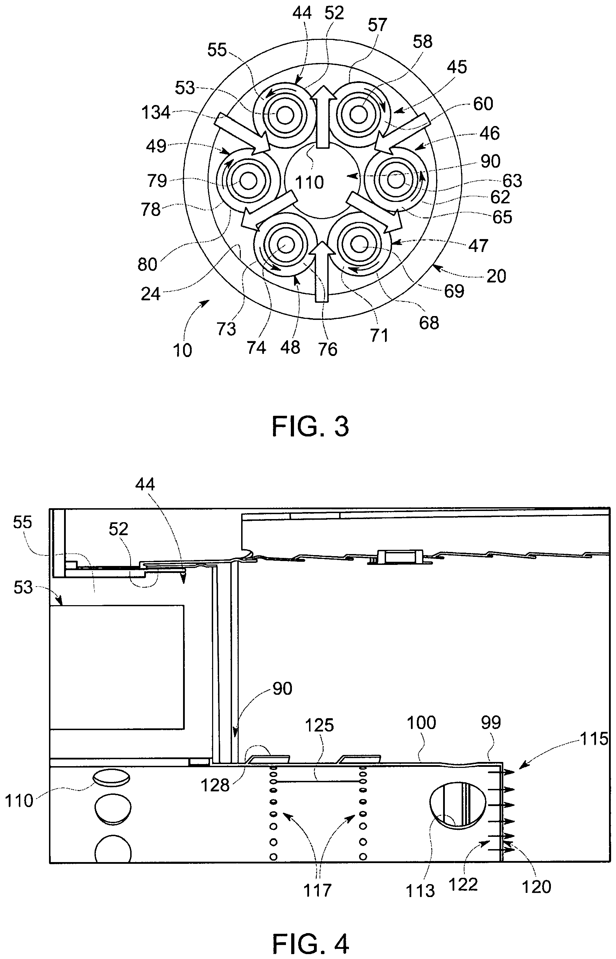

In accordance with an exemplary embodiment, combustor 10 includes a combustor body 20 within which is arranged a combustor liner 24. Combustor liner 24 is spaced from combustor body 20 so as to define a passage 26. Combustor liner 24 defines a combustion chamber 30 having a first or head end 32 provided with a combustor cap 34 and a second or discharge end 37 that is fluidly coupled to transition piece 14. Combustor 10 includes a plurality of combustor nozzles 44-49 (FIG. 3) arranged at head end 32. Combustor nozzles 44-49 are arranged in an annular array having a central region (not separately labeled).

In the exemplary embodiment shown, combustor nozzle 44 includes an outer nozzle portion 52 that surrounds a central discharge portion 53. Outer nozzle portion 52 is spaced from central discharge portion 53 to form a fluid cavity 55. As will be discussed more fully below, fluid cavity 55 receives a non-combustible fluid such as air, steam, and/or an inert gas. The non-combustible fluid mixes with a combustible fluid received through a fuel inlet 56 that extends through combustor cap 34. The combustible fluid passes through central discharge portion 53 and mixes with the non-combustible fluid to form a combustible mixture. The non-combustible fluid also provides cooling to combustor nozzle 44. In a manner similar to that described above, combustion nozzle 45 includes an outer nozzle portion 57, a central discharge portion 58 and a fluid cavity 60; combustor nozzle 46 includes an outer nozzle portion 62, a central discharge portion 63 and a fluid cavity 65; combustor nozzle 47 includes an outer nozzle portion 68, a central discharge portion 69 and a fluid cavity 71; combustor nozzle 48 includes an outer nozzle portion 73, a central discharge portion 74 and a fluid cavity 76; and combustor nozzle 49 includes an outer nozzle portion 78, a central discharge portion 79, and a fluid cavity 80.

In further accordance with the exemplary embodiment, combustor 10 includes a fluid delivery nozzle 90 arranged at head end 32 and positioned within the central region (not separately labeled) of combustor nozzles 44-49. Fluid delivery nozzle 90 is fluidly connected to a non-combustible fluid inlet 92 and includes a nozzle body 94 having a first end portion 98 that extends to a second end portion 99 through a wall portion 100. Fluid delivery nozzle 90 includes a plurality of combustor nozzle outlets, one of which is indicated at 110, formed in wall portion 100. Fluid delivery nozzle 90 also includes a first plurality of combustion chamber outlets, one of which is indicated at 113, a second plurality of combustion chamber outlets, one of which is indicated at 115, and a third plurality of combustion chamber outlets 117 provided in wall potion 100. First plurality of combustion chamber outlets 113 take the form of openings (not separately labeled) formed in wall portion 100. While shown in a single row that extends about nozzle body 94, the number or rows and size of the first plurality of combustion chamber outlets 113 may vary. Second plurality of combustion chamber outlets 115 takes the form of a mini effusion plate 120 having a plurality of openings 122. Third plurality of combustion chamber outlets 117 take the form of openings 125 formed in wall portion 100 between combustor nozzle outlets 110 and first combustion chamber outlets 113. Openings 125 are formed at a pair of flow re-direction elements, one of which is indicated at 128 provided on an outer surface (not separately labeled) of wall portion 100.

With this arrangement, a combustible fluid or fuel is passed through fuel inlet 56 toward combustor nozzles 44-49. The fuel passes from each central discharge portion 53, 58, 63, 69, and 74. At generally the same time, a non-combustible fluid or air is passed through non-combustible fluid inlet 92 toward fluid delivery nozzle 90. The non-combustible fluid flows along nozzle body 94 and passes into each fluid cavity 55, 60, 65, 71, 76 and 80 through combustor nozzle outlets 110. More specifically, combustor nozzle outlets 110 are configured to deliver the non-combustible fluid into two adjacent ones of combustor nozzles 44-49. With this arrangement, the non-combustible fluid enters each fluid cavity 55, 60, 65, 71, 76 and 80 in a particular orientation. For example, the non-combustible fluid entering fluid cavity 55 may flow with a counter- clockwise swirl and non-combustible fluid may enter fluid cavity 60 with a clockwise swirl such as shown in FIG. 3. Thus, swirls in adjacent nozzles flow in opposite directions. The non-combustible fluid mixes with the combustible fluid and passes from each combustor nozzle 44-49 as a combustible mixture that is combusted within combustion chamber 30 to form hot gases. The hot gases flow from combustor 10 into transition piece 14 and on toward a first stage of turbine portion 6.

Additionally, a second portion of the non-combustible fluid entering fluid nozzle 90 passes through first combustion chamber outlets 113, a third portion of the non-combustible fluid passes through second combustion chamber outlets 115, and a fourth portion of the non-combustible fluid passes through third combustion chamber outlets 117. The second portion of non-combustible fluid passing from first combustion chamber outlets 113 flows radially from fluid nozzle 90 into combustion chamber 30 to mix with the combustible mixture to aid in more complete combustion. The third portion of fluid passes through second combustion chamber outlets 115 axially into combustion chamber 30 and provides cooling to mini effusion plate 120. The presence of mini-effusion plate 120 creates a flow restriction that establishes a desired pressure within fluid nozzle 90. Finally, the fourth portion of the non-combustible fluid passes through third combustion chamber outlets 117 and is re-directed by flow re-direction members 118 to form a film cooling flow that flows over the outer surface (not separately labeled) of wall member 100 for cooling purposes.

In addition to the combustible and non-combustible fluids mixing and flowing from combustor nozzles 44-49 and fluid nozzle 90, combustor 10 includes an additional non-combustible fluid outlets 134 formed in combustor liner 24. Additional non-combustible fluid outlets 134 guide another non-combustible fluid, such as exhaust gas (EG), steam, or another inert gas into combustion chamber 30 to further enhance combustion and lead to reduced emissions. Additional non-combustible fluid outlets 134 direct the additional non-combustible fluid radially inward toward fluid delivery nozzle 90. More specifically, additional non-combustible fluid outlets 134 are positioned to guide the additional non-combustible fluid between adjacent ones of combustor nozzles 44-49 to mix with and combust with the combustible mixture. The introduction of the additional non-combustible fluid provides cooling to inner surfaces (not separately labeled) of the combustor liner and further leads to lower emissions from turbomachine 2. Cooling the inner surface of the combustion liner leads to an increase in service life of the combustion liner and, by extension, the combustor. That is, by increasing a service life of the combustor, costly maintenance procedures are reduced along with a downtime of the turbomachine. In addition, mixing of combustible and non-combustible fluid provided by the fluid delivery nozzle along with the additional non-combustible fluids leads to more complete burning of various substances such as CO and the like that lead to lower emissions from gas turbomachine 2.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbomachine combustor assembly comprising:
a combustor body (20);
a combustor liner (24) arranged within the combustor body, the combustor liner defining a combustion chamber (30) having a head end (32) and a discharge end (37);
a plurality of combustor nozzles (44 - 49) arranged in an annular array at the head end of the combustion chamber;
a fluid delivery nozzle (90) arranged substantially centrally within the annular array at the head end of the combustion chamber, the fluid delivery nozzle including a first end portion (98) that extends to a second end portion (99) through a wall portion (100), the wall portion including at least one combustion chamber outlet (113, 115, 117), **characterised in that**, the fluid delivery nozzle being configured to deliver a non-combustible fluid into the at least one of the plurality of combustor nozzles, wherein the wall portion includes a plurality of combustor nozzle outlets (110) fluidly connected to the plurality of combustor nozzles, and one of the plurality of combustor nozzle outlets is configured to deliver the non-combustible fluid into two adjacent ones of the plurality of combustor nozzles.

2. The turbomachine combustor assembly according to claim 1, wherein the at least one combustion chamber outlet includes a first combustion chamber outlet (115) formed in the second end portion and a second combustion chamber outlet (113) formed in the wall portion adjacent the second end portion.

3. The turbomachine combustor assembly according to claim 2, wherein the first combustion chamber outlet of the fluid delivery nozzle comprises an effusion plate (120) provided at the second end portion, the effusion plate having a plurality of openings that partially obstruct flow passing from the fluid delivery nozzle into the combustion chamber.

4. The turbomachine assembly according to claim 3, wherein the second combustion chamber outlet includes a plurality of openings formed in the wall portion at the second end portion.

5. The turbomachine assembly according to claim 4, wherein the plurality of openings extend circumferentially about the wall portion at the second end portion.

6. The turbomachine combustor assembly according to claim 1, further comprising: at least one additional non-combustible fluid outlet (134) formed in the combustor liner adjacent the head end of the combustion chamber, the at least one additional non-combustible fluid outlet being configured and disposed to deliver additional non-combustible fluid toward the plurality of combustor nozzles.

7. The turbomachine combustor assembly according to claim 6, wherein the additional non-combustible fluid includes one of an exhaust gas and an inert gas.

8. The turbomachine combustor assembly according to claim 1, wherein the non-combustible fluid is air.

9. A method of introducing a non-combustible fluid into a turbomachine combustor (10), the method comprising:
delivering a non-combustible fluid into a fluid delivery nozzle (90) extending into a combustion chamber (30) of the turbomachine combustor;
**characterised in** passing a first portion of the non-combustible fluid radially outward from the fluid delivery nozzle into at least one of a plurality of combustor nozzles (44-49) arrayed about the fluid delivery nozzle, wherein passing the first portion of the non-combustible fluid into at least one of the plurality of combustor nozzles includes passing the first portion of the non-combustible fluid into a first combustor nozzle creating a flow about the first combustor nozzle in a first direction and into a second combustor nozzle creating a flow about the second combustor nozzle in a second direction that is opposite to the first direction, and
passing a second portion of the non-combustible fluid into the combustion chamber through a combustion chamber outlet (113) formed at an end of the fluid delivery nozzle.

10. The method of claim 9, wherein passing the first portion of the non-combustible fluid into at least one of the plurality of combustor nozzles includes passing the first portion of the non-combustible fluid through a combustor nozzle outlet (110) formed in a wall (100) of the fluid delivery nozzle into two adjacent ones of the plurality of combustor nozzles.

11. The method of claim 9, further comprising: passing a third portion of the non-combustible fluid through another combustion chamber outlet (120) formed at the end of the fluid delivery nozzle, the second portion of the non-combustible fluid passing radially from the fluid delivery nozzle into the combustion chamber and the third portion of the non-combustible fluid passing axially from the fluid delivery nozzle into the combustion chamber.

12. The method of claim 9, further comprising: passing an additional non-combustible fluid through a liner of the turbomachine combustor toward the fluid delivery nozzle.

13. The method of claim 12, wherein passing the additional non-combustible fluid toward the fluid delivery nozzle includes passing one of an exhaust gas and an inert gas between adjacent ones of the plurality of combustor nozzles.

## Patentansprüche

1. Verbrenneranordnung einer Turbomaschine mit:
einem Verbrennerkörper (20);
einer in dem Verbrennerkörper angeordneten Verbrennerauskleidung (24), wobei die Verbrennerauskleidung einen Brennraum (30) mit einem Kopfende (32) und einem Ablassende (37) definiert;
einer Mehrzahl von Verbrennerdüsen (44-49), die in einer kreisförmigen Anordnung am Kopfende des Brennraums angeordnet sind;
einer Fluidzuführdüse (90), die im Wesentlichen mittig in der ringförmigen Anordnung am Kopfende des Brennraums angeordnet ist, wobei die Fluidzuführdüse einen ersten Endteil (98) aufweist, der sich zu einem zweiten Endteil (99) durch einen Wandteil (100) erstreckt, wobei der Wandteil mindestens einen Brennraumauslass (113, 115, 117) aufweist,
**dadurch gekennzeichnet, dass**
die Fluidzuführdüse dazu ausgebildet ist, ein nicht brennbares Fluid in die mindestens eine der Mehrzahl von Verbrennerdüsen zu liefern, wobei der Wandteil eine Mehrzahl von Verbrennerdüsenauslässen (110) aufweist, die in Fluidverbindung mit der Mehrzahl von Verbrennerdüsen stehen, und eine der Mehrzahl von Verbrennerdüsenauslässen dazu ausgebildet ist, das nicht brennbare Fluid in zwei benachbarte der Mehrzahl von Verbrennerdüsen zu liefern.

2. Verbrenneranordnung einer Turbomaschine nach Anspruch 1, wobei der mindestens eine Brennraumauslass einen ersten Brennraumauslass (115), der in dem zweiten Endteil gebildet ist, und einen zweiten Brennraumauslass (113), der in dem Wandteil gebildet ist, der dem zweiten Endteil benachbart angeordnet ist, aufweist.

3. Verbrenneranordnung einer Turbomaschine nach Anspruch 2, wobei der erste Brennraumauslass der Fluidzuführdüse eine an dem zweiten Endteil vorgesehene Effusionsplatte (120) aufweist, wobei die Effusionsplatte eine Mehrzahl von Öffnungen aufweist, die die Strömung, die von der Fluidzuführdüse in den Brennraum gelangt, teilweise behindern.

4. Verbrenneranordnung einer Turbomaschine nach Anspruch 3, wobei der zweite Brennraumauslass eine Mehrzahl von Öffnungen aufweist, die in dem Wandteil an dem zweiten Endteil gebildet sind.

5. Verbrenneranordnung einer Turbomaschine nach Anspruch 4, wobei die Mehrzahl von Öffnungen sich umfangsmäßig um den Wandteil an dem zweiten Endteil erstreckt.

6. Verbrenneranordnung einer Turbomaschine nach Anspruch 1, ferner aufweisend:
mindestens einen Auslass (134) für zusätzliches nicht brennbares Fluid, der in der Verbrennerauskleidung dem Kopfende des Brennraums benachbart gebildet ist, wobei der mindestens eine Auslass für zusätzliches nicht brennbares Fluid dafür ausgebildet und vorgesehen ist, zusätzliches nicht brennbares Fluid an die Mehrzahl der Verbrennerdüsen zu liefern.

7. Verbrenneranordnung einer Turbomaschine nach Anspruch 6, wobei das zusätzliche nicht brennbare Fluid ein Abgas und/oder ein Inertgas aufweist.

8. Verbrenneranordnung einer Turbomaschine nach Anspruch 1, wobei das nicht brennbare Fluid Luft ist.

9. Verfahren zum Einführen eines nicht brennbaren Fluids in einen Verbrenner (10) einer Turbomaschine, wobei das Verfahren beinhaltet:
Liefern eines nicht brennbaren Fluids in eine Fluidzuführdüse (90), die sich in einen Brennraum (30) das Verbrenners der Turbomaschine erstreckt,
**gekennzeichnet durch**
Führen eines ersten Teils des nicht brennbaren Fluids radial von der Fluidzuführdüse nach außen in mindestens eine einer Mehrzahl von Verbrennerdüsen (44-49), die um die Fluidzuführdüse herum angeordnet sind, wobei das Führen des ersten Teils des nicht brennbaren Fluids in mindestens eine der Mehrzahl von Verbrennerdüsen das Führen des ersten Teils des nicht brennbaren Fluids in eine erste Verbrennerdüse, was eine Strömung um die erste Verbrennerdüse herum in eine erste Richtung schafft, und in eine zweite Verbrennerdüse, was eine Strömung um die zweite Verbrennerdüse herum in eine zweite Richtung schafft, die der ersten Richtung entgegengesetzt ist, beinhaltet, und
Führen eines zweiten Teils des nicht brennbaren Fluids in den Verbrennungsraum durch einen Brennraumauslass (113), der an einem Ende der Fluidzuführdüse gebildet ist.

10. Verfahren nach Anspruch 9, wobei das Führen des ersten Teils des nicht brennbaren Fluids in die mindestens eine der Mehrzahl von Verbrennerdüsen das Führen des ersten Teils des nicht brennbaren Fluids durch einen in einer Wand (100) der Fluidzuführdüse gebildeten Verbrennerdüsenauslass (110) in zwei benachbarte der Mehrzahl von Verbrennerdüsen beinhaltet.

11. Verfahren nach Anspruch 9, das ferner beinhaltet:
Führen eines dritten Teils des nicht brennbaren Fluids durch einen am Ende der Fluidzuführdüse gebildeten weiteren Brennraumauslass (120), wobei der zweite Teil des nicht brennbaren Fluids radial von der Fluidzuführdüse in den Brennraum gelangt und der dritte Teil des nicht brennbaren Fluids axial von der Fluidzuführdüse in den Brennraum gelangt.

12. Verfahren nach Anspruch 9, das ferner beinhaltet: Führen eines zusätzlichen nicht brennbaren Fluids durch eine Auskleidung des Verbrenners der Turbomaschine zur Fluidzuführdüse hin.

13. Verfahren nach Anspruch 12, wobei das Führen des zusätzlichen nicht brennbaren Fluids zur Fluidzuführdüse hin das Führen eines Abgases und/oder Inertgases zwischen benachbarten der Mehrzahl von Verbrennerdüsen beinhaltet.

## Revendications

1. Ensemble formant système de combustion pour turbomachine comprenant :
un corps de système de combustion (20) ;
un revêtement de système de combustion (24) placé dans le corps de système de combustion, le revêtement de système de combustion définissant une chambre de combustion (30) qui possède une extrémité avant (32) et une extrémité de décharge (37);
une pluralité de buses de système de combustion (44 à 49) placées en anneau au niveau de l'extrémité avant de la chambre de combustion ;
une buse de distribution de fluide (90) prévue sensiblement au centre de l'anneau au niveau de l'extrémité avant de la chambre de combustion, la buse de distribution de fluide comprenant une première partie d'extrémité (98) qui s'étend jusqu'à une seconde partie d'extrémité (99) à travers une partie de paroi (100), la partie de paroi comprenant au moins une évacuation de chambre de combustion (113, 115, 117), **caractérisé en ce que** la buse de distribution de fluide est configurée pour fournir un fluide non combustible à au moins l'une de la pluralité de buses de système de combustion, la partie de paroi comprenant une pluralité d'évacuations de buses de système de combustion (110) reliées de manière fluide à la pluralité de buses de système de combustion, et l'une de la pluralité d'évacuations de buses de système de combustion est configurée pour délivrer le fluide non combustible à deux buses adjacentes parmi la pluralité de buses de système de combustion.

2. Ensemble formant système de combustion pour turbomachine selon la revendication 1, dans lequel l'évacuation de chambre de combustion au moins comprend une première évacuation de chambre de combustion (115) formée dans la seconde partie d'extrémité et une seconde évacuation de chambre de combustion (113) formée dans la partie de paroi adjacente à la seconde partie d'extrémité.

3. Ensemble formant système de combustion pour turbomachine selon la revendication 2, dans lequel la première évacuation de chambre de combustion de la buse de distribution de fluide comprend une plaque d'effusion (120) prévue au niveau de la seconde partie d'extrémité, la plaque d'effusion ayant une pluralité d'ouvertures qui obstruent partiellement l'écoulement qui passe entre la buse de distribution de fluide et la chambre de combustion.

4. Ensemble formant système de combustion pour turbomachine selon la revendication 3, dans lequel la seconde évacuation de chambre de combustion comprend une pluralité d'ouvertures formées dans la partie de paroi au niveau de la seconde partie d'extrémité.

5. Ensemble formant système de combustion pour turbomachine selon la revendication 4, dans lequel la pluralité d'ouvertures s'étend de manière circonférentielle autour de la partie de paroi au niveau de la seconde partie d'extrémité.

6. Ensemble formant système de combustion pour turbomachine selon la revendication 1, comprenant en outre : au moins une évacuation de fluide non combustible supplémentaire (134) formée dans le revêtement de système de combustion de manière adjacente à l'extrémité avant de la chambre de combustion, l'évacuation de fluide non combustible supplémentaire au moins étant configurée et prévue pour délivrer un fluide non combustible supplémentaire vers la pluralité de buses de système de combustion.

7. Ensemble formant système de combustion pour turbomachine selon la revendication 6, dans lequel le fluide non combustible supplémentaire comprend l'un d'un gaz d'échappement et d'un gaz inerte.

8. Ensemble formant système de combustion pour turbomachine selon la revendication 1, dans lequel le fluide non combustible est de l'air.

9. Procédé d'introduction d'un fluide non combustible dans un système de combustion de turbomachine (10), le procédé comprenant :
le fait de délivrer un fluide non combustible à une buse de distribution de fluide (90) qui s'étend dans une chambre de combustion (30) du système de combustion de turbomachine ;
**caractérisé en ce qu'**une première partie du fluide non combustible passe radialement vers l'extérieur entre la buse de distribution de fluide et au moins l'une de la pluralité de buses de système de combustion (44 à 49) disposées autour de la buse de distribution de fluide, le passage de la première partie du fluide non combustible vers au moins l'une de la pluralité de buses de système de combustion comprenant le passage de la première partie du fluide non combustible dans une première buse de système de combustion en créant un écoulement autour de la première buse de système de combustion dans une première direction, et dans une seconde buse de système de combustion en créant un écoulement autour de la seconde buse de système de combustion dans une seconde direction qui est opposée à la première direction, et
le passage d'une seconde partie du fluide non combustible dans la chambre de combustion, par le biais d'une évacuation de chambre de combustion (113) formée au niveau d'une extrémité de la buse de distribution de fluide.

10. Procédé selon la revendication 9, dans lequel le passage de la première partie du fluide non combustible dans au moins l'une de la pluralité de buses de système de combustion comprend le passage de la première partie du fluide non combustible par une évacuation de buse de système de combustion (110) formée dans une paroi (100) de la buse de distribution de fluide, vers deux buses adjacentes parmi la pluralité de buses de système de combustion.

11. Procédé selon la revendication 9, comprenant en outre : le passage d'une troisième partie du fluide non combustible par une autre évacuation de chambre de combustion (120) formée au niveau de l'extrémité de la buse de distribution de fluide, la seconde partie du fluide non combustible passant radialement entre la buse de distribution de fluide et la chambre de combustion, et la troisième partie du fluide non combustible passant axialement entre la buse de distribution de fluide et la chambre de combustion.

12. Procédé selon la revendication 9, comprenant en outre : le passage d'un fluide non combustible supplémentaire par un revêtement du système de compression de turbomachine, vers la buse de distribution de fluide.

13. Procédé selon la revendication 12, dans lequel le passage du fluide non combustible supplémentaire vers la buse de distribution de fluide comprend le passage de l'un d'un gaz d'échappement et d'un gaz inerte entre des buses adjacentes parmi la pluralité de buses de l'ensemble formant système de combustion.
